# EUROPEAN PATENT SPECIFICATION

(11) **EP 2 179 216 B1**
(45) Date of publication and mention of the grant of the patent: **02.11.2011**
(21) Application number: 08720181.0
(22) Date of filing: 04.01.2008
(51) Int. Cl.: F21S 8/10, B60Q 1/26

(54) **LIGHTING DEVICE, IN PARTICULAR LIGHT SIGNALLING SUPPLEMENTARY DEVICE FOR RESCUE AND EMERGENCY PRIORITARY VEHICLES**
BELEUCHTUNGSVORRICHTUNG, INSBESONDERE LICHTSIGNALZUSATZVORRICHTUNG FÜR RETTUNGS- UND EINSATZSONDERFAHRZEUGE
DISPOSITIF D'ÉCLAIRAGE, EN PARTICULIER DISPOSITIF SUPPLÉMENTAIRE DE SIGNALISATION LUMINEUSE POUR VÉHICULES PRIORITAIRES DE SAUVETAGE ET DE SECOURS

(30) Priority: 25.07.2007 IT RM20070408; 08.10.2007 IT RM20070531
(43) Date of publication of application: 28.04.2010
(73) Proprietor: Intav S.R.L., 00040 Ariccia - Roma (IT)
(72) Inventor: FRANCESCHELLI, Luciano, I-00040 Ariccia - Roma (IT); FRANCESCANGELI, Maurizio, I-00040 Ariccia - Roma (IT); MANCINI, Angelo, I-00040 Ariccia - Roma (IT)
(74) Representative: Santi, Filippo
(86) International application number: PCT/IT2008/000011
(87) International publication number: WO 2009/013771

(56) References cited:
- EP-A- 1 488 954
- FR-A- 2 858 681
- US-A1- 2003 156 416
- US-A1- 2006 285 348

## Description

The invention concerns a lighting device, in particular light signalling supplementary device for rescue and emergency prioritary vehicles.

More in detail, the lighting device according to the invention is a device of supplementary light signalling to be used, for example, on vehicles that are on emergency and rescue service and more in particular a light signalling device that incorporates light emitting LED that are flashing inside a unique cavity with vertical parabolic cross-section which is suited to convey the light beams in a pre-defined circular sector, without continuity loss and increasing intensity.

US2006285348 discloses a vehicle light assembly with an outer lens having at least two regions to be illuminated and employing semiconductor light sources arranged into at least two lighting circuits, a different lighting circuit illuminating each region and the light sources in one lighting circuit being mounted on an opposite side of a planar mount in the light assembly from the light sources in the other lighting circuit. A reflector is provided in the assembly housing, either as a separate body or as an integrally formed surface, and includes a first array of reflecting surfaces inclined to direct light from the light sources in the first lighting circuit through a first region of the outer lens and a second array of reflecting surfaces inclined to direct light from the light sources in the second lighting circuit through a second region of the outer lens.

Supplementary light signalling devices are known in the prior art, wherein the LED light emitters are typically single emitters with their own parabolic reflector and are mounted one nearby the other to cover the interest sector, e.g. circular sector.

US2003/156416 A1 discloses a light source that utilizes a parabolic reflector to collimate light emitted from at greater than a predetermined angle relative to the optical axis of an LED arranged at the focus of the reflector, to provide light in the form of a substantially collimated beam. The parabolic reflector is extended along its focal point to form a linear parabolic section having a linear focal axis. A linear array of LEDs is arranged such that the linear focal axis passes through the area of light emission of each LED. The linear parabolic section may be provided with parabolic dish ends. Alternatively, the ends of the parabolic section may be left open for increased wide angle visibility.

Such type of structure entails project difficulties and high economical costs owing to the management and assembling of many separated elements.

Moreover, in general, these light signalling devices are subjected to specific homologation that comprises, among others conditions, a light diffusion that is pre-determined and uniformly distributed between predefined angles, so that it is needed to use, in their construction, all those expedients which are necessary and sufficient to satisfy the homologation conditions and to respect along time the production conformity requirements.

For all this, an innovative structure, simplified and reliable of such device types would allow to easily respond to the homologation requirements prescribed by the law, to cut production costs and to make the device more effective.

It is object of the present invention a lighting device that solves the prior art technique and would constitute a convenient and effective alternative thereof.

It is **subject-matter** of the present invention a lighting device, wherein:
- the light source comprises a plurality of LEDs and a reflecting body (120) for the housing of the source and the conveying of the light according to a pre-defined exit angle of the light beam,
- the internal surface of said reflecting body has a cross-section, with respect to its principal extension direction, that comprises at least two portions of a parabola which are symmetrical with respect to the axis of the same parabola;
- substantially in the focus of said cross-section is housed a plurality of LED;
- the LEDs of said plurality of LEDs being connected to a first side of a laminar strip, on the second side of the laminar strip, side facing in the direction opposite to said reflecting body, being connected a dissipative element for dissipating heat generated by the LED,
said reflecting body is a hollow body;
**characterised in that**:
- the principal extension direction of said reflecting body is circular;
- the reflecting body comprises two partially reflecting elements with a principal extension direction, substantially identical and connectable with opposite corresponding profiles,
- each partially reflecting element comprises a groove along said direction of principal extension, which is suited to receive said laminar strip,
- the reflecting portion of each partially reflecting element presents a cross section, with respect to said principal extension direction, which is semi-parabolic, so as to form the reflecting portion of the cross-sectional reflecting body, the LEDs being placed substantially in the focus of said parabolic cross-section.

Preferably according to the invention, the LEDs of said plurality of LEDs are connected so as to be equally spaced on the laminar strip.

Preferably according to the invention, said laminar strip is a bimetallic printed circuit and presents for each LED a metallic pad with metallised holes for connection to a corresponding pad on the opposite side, that is directly contacting said heat dissipation band.

Preferably according to the invention, before each LED, at a pre-determined distance from it, a lens is placed, in such a way that the light rays pass only or across through said lens or go impinge on the parabolic surface of said reflecting body, so as to convey all rays that come from the LED, without loss.

Preferably according to the invention, the ends of said two parabola portions opposed to the LEDs are shaped so as to constitute guide and partial seat of a transparent element for LED protection.

Preferably according to the invention, it comprises a supplementary dissipative device in the case where the LEDs are red or yellow.

The invention will be now described, by way of illustration but not by way of limitation according to its preferred embodiments, making reference to the figures of the annexed drawings, wherein:
figure 1 shows an embodiment of the lighting device according to the present invention;
figure 2 shows a detail of a portion of the device according to figure 1;
figure 3 shows a further detail of a portion of the device according to figure 2;
figure 4 shows an electrical connection diagram of the lighting device according to the present invention;

In the figures, equal references will be used to indicate equal elements.

For the sake of description easiness, in the following an only embodiment of the device according to the invention will be described, however it is to be understood that many other embodiments are possible using the same inventive concept. In particular, it is to be stressed that the essential features of the invention can be implemented both in a device with circular form and in a device with rectilinear or mixed form, keeping in any case all the technical advantages illustrated in the following.

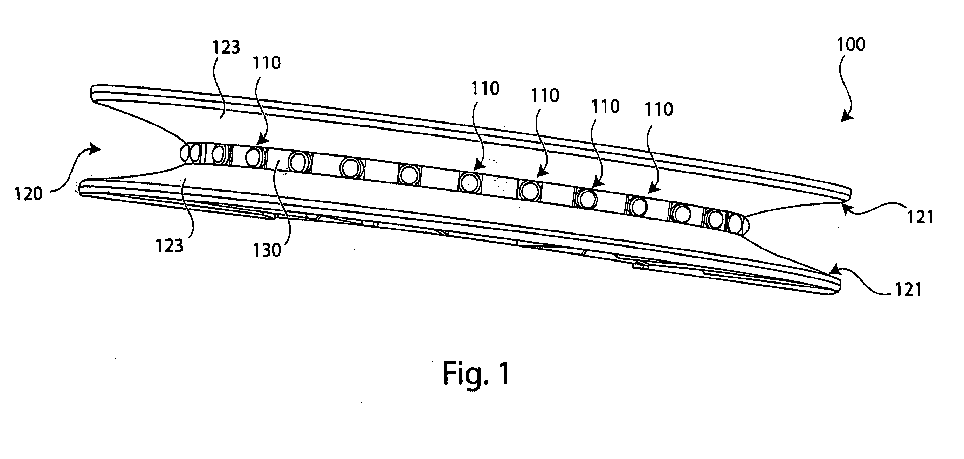

With reference to figure 1, in a particular example embodiment the lighting device 100 according to the invention comprises a disc-form reflecting body 120 divided in two halves or circular elements 121, axially connectable one with the other approaching corresponding opposite profiles.

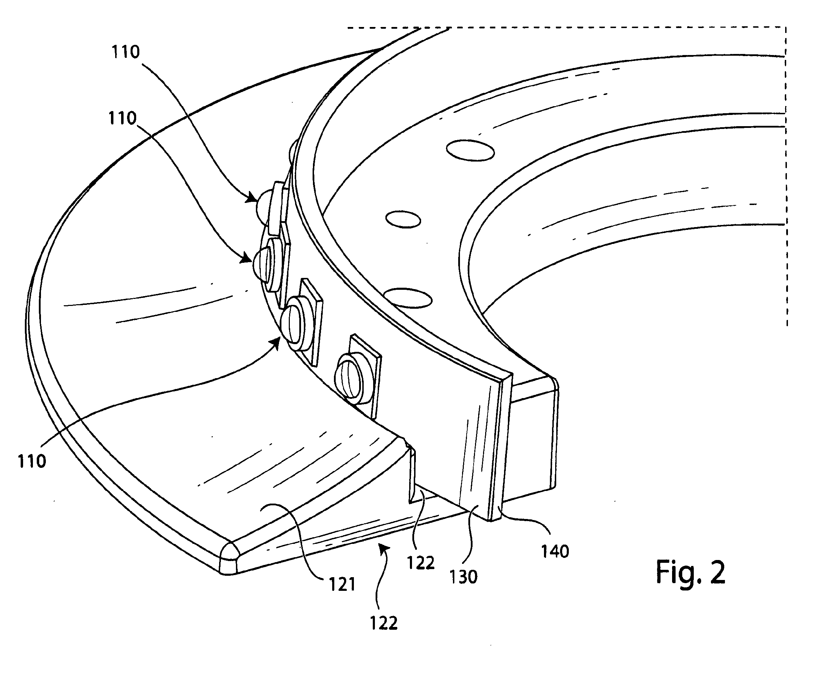

With reference to figure 2, each circular element 121 presents a perimeter groove 122 wherein a flexible laminar strip 130, with the LED 110 installed thereon, is insertable.

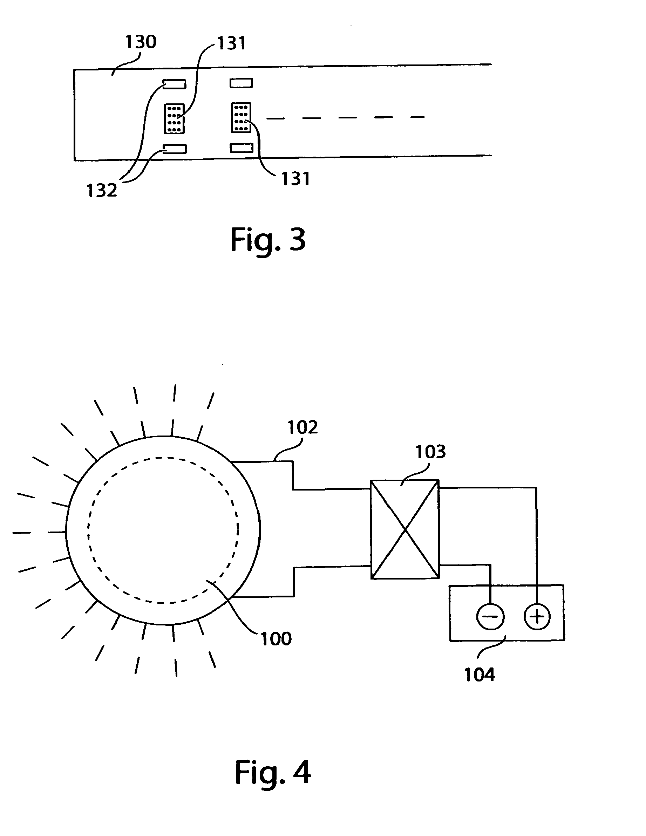

As illustrated in figure 3, for each LED 110 there are on the lamina 130 two welding bump contact 132 and a multi-holed bump contact 131 with metallised holes connecting such a bump contact with a similar back bump contact, for the heat transmission from the basis of the LED 110 backwards so as to allow the heat dissipation by conventional systems as a aluminium band 140 coupled with the lamina 130.

Making reference to figure 4, an electronic central unit 103, by the electrical cables 102 and the electrical source 104, allows the management and functional control of the lighting device 100 constituted by the body 120 divided in two halves and by the LED lamina 130 coupled to the dissipative band 140, preferably an aluminium band.

In fact, the LED can be positioned also without the laminar strip, which however turns out to be particularly advantageous.

According to a different, preferred embodiment, the reflecting body 120 is not formed by two semi-parabolic elements, but by an only parabolic reflector element. The lamina 130 will be positioned by connecting it from behind or in another known way.

Coming now to describe in more detail the light features of the device 100, one will note in figure 2 that only a part 123 of the circular element 121 needs to be reflecting with respect to the light of the LEDs 110. It is the part radially more external of the device and has a parabolic vertical cross-section (i.e. a cross-section with respect to a plane passing through the axis of the device), the LEDs 110 being positioned the most possible closed to the focus of the parabola.

In such a way, one obtains that the light beams emitted by each LED sum up to provide an exit circular beam that is uniform and horizontally directed.

In the case where the reflector element is not circular, but has its principal extension direction along a circle arc, or the principal extension direction is not a closed line, the LEDs are placed in a more dense way in the proximity of the ends (in the sense of the principal extension direction) of the reflector body, in such a way to compensate for the lacking of light rays coming from the other LEDs on that side further to the end.

In a way common to all the embodiments, it is possible to provide each LED with a lens 150 placed frontally at a certain distance. The distance is determined in such a way that all the rays that do not pass through the same lens will impinge on the internal surface 125 of the reflector body. In such a way, one avoids that some rays go behind the reflecting body 120, be it solid or hollow, and dissipate themselves in the environment, going therefore outside the beam collimated by the reflector body.

The present invention, because of the foregoing, allows to simplify and optimise in an innovative way the construction of a supplementary flashing signalling device with LED light by controlling a reduced amount of components, thus innovating the system of light emission, innovating the system of allocation and dissipation of the heat from the utilised LEDs, and cutting the production costs.

The device according to the invention has been further thought for the use alone or in combination with one or more identical devices to realise different geometrical forms of supplementary light signalling bar for emergency and rescue vehicles, considering aesthetical and technical grounds. In particular, more devices of the described type can be coupled one on the other in order to increase the light intensity.

As above briefly mentioned, the state of the art relevant to the lighting science and light signalling is characterised by single light emitters with a parabolic body that conveys, inside a certain solid angle, the light flux in order to increase the intensity.

The invention considers instead a parabolic vertical section which develops along a direction that can be rectilinear or curvilinear, in particular circular, thus determining in the latter case an ideal 360° reflector of the light rays emitted by LEDs placed in the focuses of such a circular sector with parabolic vertical cross-section.

Another innovative element is represented by the laminar strip whereon the LED are mounted, above all for all that concerns its flexibility and the LEDs installation way. Indeed such a strip is of reduced thickness and is very flexible so as to allow the positioning both on curved geometries and rectilinear geometries. To such lamina one couples a dissipation band.

The device according to the invention is for all this easily producible because it needs not much manpower, contrary to the prior art devices. The reflecting parabolic element is indeed unique for all the LEDs and these are pre-mounted on a unique support (laminar strip).

In particular, with LED of power larger that a Watt one obtains a light beam intensity adapted to the applications for light signalling of prioritary vehicles.

The preferred embodiments have been above described and some modifications of this invention have been suggested, but it should be understood that those skilled in the art can make variations and changes, without so departing from the related scope of protection, as defined by the following claims.

## Claims

1. Lighting device (100,100'), wherein:
- the light source comprises a plurality of LEDs (110) and a reflecting body (120) for the housing of the source and the conveying of the light according to a pre-defined exit angle of the light beam,
- the internal surface (125) of said reflecting body (120) has a cross-section, with respect to its principal extension direction, that comprises at least two portions (121,121') of a parabola which are symmetrical with respect to the axis of the same parabola;
- substantially in the focus of said cross-section is housed a plurality of LED (110);
- the LEDs (110) of said plurality of LEDs being connected to a first side of a laminar strip (130), on the second side (132) of the laminar strip, side facing in the direction opposite to said reflecting body, being connected a dissipative element (140) for dissipating heat generated by the LED (110),
said reflecting body (120) is a hollow body;
**characterised in that**:
- the principal extension direction of said reflecting body (120) is circular;
- the reflecting body (120) comprises two partially reflecting elements (121) with a principal extension direction, substantially identical and connectable with opposite corresponding profiles,
- each partially reflecting element (121) comprises a groove (122) along said direction of principal extension, which is suited to receive said laminar strip (130),
- the reflecting portion (123) of each partially reflecting element (121) presents a cross section, with respect to said principal extension direction, which is semi-parabolic, so as to form the reflecting portion of the cross-sectional reflecting body (120), the LEDs (110) being placed substantially in the focus of said parabolic cross-section.

2. Device according to any claim 1, **characterised in that** the LEDs of said plurality of LEDs (110) are connected so as to be equally spaced on the laminar strip.

3. Device according to any claim 1 to 2, **characterised in that** said laminar strip (130) is a bimetallic printed circuit and presents for each LED a metallic pad (131) with metallised holes for connection to a corresponding pad on the opposite side, that is directly contacting said heat dissipation band (140).

4. Device according to any claim 1 to 3, **characterised in that** before each LED (110), at a pre-determined distance from it, a lens is placed, in such a way that the light rays pass only or across through said lens or go impinge zion the parabolic surface of said reflecting body (120), so as to convey all rays that come from the LED, without loss.

5. Device according to any claim 1 to 4, **characterised in that** the ends (126) of said two parabola portions (121,121') opposed to the LEDs (110) are shaped so as to constitute guide and partial seat of a transparent element for LED protection.

6. Device according to any claim 1 to 5, **characterised in that** it comprises a supplementary dissipative device in the case where the LEDs (110) are red or yellow.

## Patentansprüche

1. Beleuchtungsvorrichtung (100, 100'), wobei:
- die Lichtquelle eine Vielzahl von LEDs (110) umfasst und einen Reflektierkörper (120) zum Aufnehmen der Quelle und Übermitteln des Lichts gemäß einem vordefinierten Ausgangswinkel des Lichtstrahls,
- wobei die Innenfläche (125) des Reflektierkörpers (120) einen Querschnitt aufweist in Bezug auf seine Haupterstreckungsrichtung, der zumindest zwei Abschnitte (121, 121') einer Parabel umfasst, die symmetrisch sind in Bezug auf die Achse derselben Parabel;
- wobei im Wesentlichen im Fokus des Querschnitts eine Vielzahl von LEDs (110) aufgenommen ist;
- wobei die LEDs (110) der Vielzahl von LEDs mit einer ersten Seite eines Laminarstreifens (130) verbunden sind, wobei auf der zweiten Seite (132) des Laminarstreifens, einer Seite, die in die Richtung entgegengesetzt zu dem Reflektierkörper weist, ein dissipatives Element (140) verbunden ist zur Dissipation von Wärme, erzeugt durch die LED (110),
wobei der Reflektierkörper (120) ein Hohlkörper ist;
**dadurch gekennzeichnet, dass**:
- die Haupterstreckungsrichtung des Reflektierkörpers (120) kreisförmig ist;
- der Reflektierkörper (120) zwei teilweise reflektierende Elemente (121) umfasst mit einer Haupterstreckungsrichtung, im Wesentlichen identisch zu und verbindbar mit gegenüberstehenden entsprechenden Profilen,
- jedes teilweise reflektierende Element (121) eine Nut (122) entlang der Richtung der Haupterstreckung umfasst, die geeignet ist, den Laminarstreifen (130) aufzunehmen,
- der reflektierende Abschnitt (123) von jedem teilweise reflektierenden Element (121) einen Querschnitt darstellt in Bezug auf die Haupterstreckungsrichtung, der halbparabolisch ist, um den reflektierenden Abschnitt des Querschnittsreflektierkörpers (120) zu bilden, wobei die LEDs (110) im Wesentlichen in dem Fokus des parabolischen Querschnitts platziert sind.

2. Vorrichtung gemäß Anspruch 1, **dadurch gekennzeichnet, dass** die LEDs der Vielzahl von LEDs (110) verbunden sind, um gleichmäßig beabstandet auf dem Laminarstreifen zu sein.

3. Vorrichtung gemäß einem der Ansprüche 1 oder 2, **dadurch gekennzeichnet, dass** der Laminarstreifen (130) eine bimetallisch gedruckte Schaltung ist und für jede LED eine metallische Unterlage (131) darstellt mit Metalllöchern zur Verbindung mit einer entsprechenden Unterlage auf der gegenüberstehenden Seite, direkt kontaktierend das Wärmedissipationsband (140).

4. Vorrichtung gemäß einem der Ansprüche 1 bis 3, **dadurch gekennzeichnet, dass** vor jeder LED (110), bei einem vorbestimmten Abstand davon, eine Linse platziert ist, derart, dass die Lichtstrahlen nur passieren oder die Linsen durchqueren oder auf die parabolische Fläche des Reflektierkörpers (120) einwirken, um alle Strahlen zu übermitteln, die von der LED kommen, ohne Verlust.

5. Vorrichtung gemäß einem der Ansprüche 1 bis 4, **dadurch gekennzeichnet, dass** die Enden (126) der zwei parabolischen Abschnitte (121, 121') gegenüberstehend den LEDs (110) geformt sind, um eine Führung und einen Teilsitz eines transparenten Elements zum LED-Schutz zu bilden.

6. Vorrichtung gemäß einem der Ansprüche 1 bis 5, **dadurch gekennzeichnet, dass** sie eine ergänzende dissipative Vorrichtung in dem Fall umfasst, wo die LEDs (110) rot oder gelb sind.

## Revendications

1. Dispositif d'éclairage (100, 100'), dans lequel :
- la source lumineuse comprend une pluralité de DEL (110) et un corps réfléchissant (120) pour le logement de la source et le transport de la lumière selon un angle de sortie du faisceau lumineux prédéfini,
- la surface interne (125) dudit corps réfléchissant (120) a une section transversale, par rapport à sa direction d'extension principale, qui comprend au moins deux parties (121, 121') d'une parabole qui sont symétriques par rapport à l'axe de cette parabole ;
- une pluralité de DEL (110) est logée essentiellement au niveau du foyer de ladite section transversale ;
- les DEL (110) de ladite pluralité de DEL étant connectées à une première face d'une bande laminaire (130), un élément dissipatif (140) pour la dissipation de la chaleur générée par la DEL (110) étant connecté à la deuxième face (132) de la bande laminaire, à savoir la face orientée dans la direction opposée audit corps réfléchissant,
ledit corps réfléchissant (120) est un corps creux ;
**caractérisé en ce que** :
- la direction d'extension principale dudit corps réfléchissant (120) est circulaire ;
- le corps réfléchissant (120) comprend deux éléments partiellement réfléchissants (121) qui ont une direction d'extension principale, qui sont essentiellement identiques et qui peuvent être connectés à des profils correspondants opposés,
- chaque élément partiellement réfléchissant (121) comprend une rainure (122) le long de ladite direction d'extension principale, qui est appropriée pour recevoir ladite bande laminaire (130),
- la partie réfléchissante (123) de chaque élément partiellement réfléchissant (121) présente une section transversale qui est semi-parabolique, par rapport à ladite direction d'extension principale, de façon à former la partie réfléchissante de la section transversale du corps réfléchissant (120), les DEL (110) étant placées essentiellement au niveau du foyer de ladite section transversale parabolique.

2. Dispositif selon la revendication 1, **caractérisé en ce que** les DEL de ladite pluralité de DEL (110) sont connectées de façon à être espacées d'une distance égale sur la bande laminaire.

3. Dispositif selon l'une quelconque des revendications 1 à 2, **caractérisé en ce que** ladite bande laminaire (130) est un circuit imprimé bimétallique et présente, pour chaque DEL, un plot métallique (131) ayant des trous métallisés pour la connexion à un plot correspondant sur la face opposée, qui est en contact direct avec ladite bande de dissipation de chaleur (140).

4. Dispositif selon l'une quelconque des revendications 1 à 3, **caractérisé en ce qu'**une lentille est placée devant chaque DEL (110), à une distance prédéterminée de celle-ci, de telle sorte que les rayons lumineux passent de l'autre côté de ladite lentille, en passant à côté d'elle ou à travers elle, ou viennent heurter la surface parabolique dudit corps réfléchissant (120), de façon à transporter tous les rayons qui proviennent des DEL, sans perte.

5. Dispositif selon l'une quelconque des revendications 1 à 4, **caractérisé en ce que** les extrémités (126) desdites deux parties de parabole (121, 121') opposées aux DEL (110) ont une forme propre à constituer un guide et un siège partiel pour un élément transparent destiné à la protection des DEL.

6. Dispositif selon l'une quelconque des revendications 1 à 5, **caractérisé en ce qu'**il comprend un dispositif dissipatif supplémentaire dans le cas où les DEL (110) sont rouges ou jaunes.
